# FASCICULE DE BREVET EUROPEEN

(11) **EP 0 697 917 B1**
(45) Date de publication et mention de la délivrance du brevet: **27.12.1996**
(21) Numéro de dépôt: 94900196.0
(22) Date de dépôt: 17.11.1993
(51) Int. Cl.: B05B 5/04, F16D 1/10

(54) **DISPOSITIF DE PROJECTION DE PRODUIT DE REVETEMENT A ELEMENT ROTATTIF DE PULVERISATION ET OUTIL POUR LE MONTAGE ET LE DEMONTAGE D'UN TEL ELEMENT ROTATIF**
FARBSPRITZVORRICHTUNG MIT ROTIERENDEM ZERSTÄUBUNGSELEMENT UND WERKZEUG ZUM MONTIEREN UND DEMONTIEREN DIESES ELEMENTS
DEVICE FOR PROJECTING A COATING PRODUCT HAVING A ROTARY SPRAYING ELEMENT AND TOOL FOR FITTING AND REMOVING SUCH ROTARY ELEMENT

(30) Priorité: 01.12.1992 FR 9214442
(43) Date de publication de la demande: 28.02.1996
(73) Titulaire: SAMES S.A., F-38240 Meylan (FR)
(72) Inventeur: PHAM, Van, Tan, F-38190 Villard Bonnot (FR); MERABET, Djamel, F-38000 Grenoble (FR)
(74) Mandataire: Myon, Gérard Jean-Pierre
(86) Numéro de dépôt international: FR9301122
(87) Numéro de publication internationale: WO9412286

(56) Documents cités:
- US-A- 2 861 829
- US-A- 4 776 520

## Description

L'invention se rapporte à un dispositif de projection de produit de revêtement à élément rotatif de pulvérisation, par exemple et de préférence en forme de bol ou cloche, entraîné à très grande vitesse par une turbine.

L'invention concerne plus particulièrement un perfectionnement rendant le dispositif de projection plus léger et plus maniable et facilitant le montage et le démontage de l'élément rotatif de pulvérisation.

L'invention concerne également un outil pour le montage et le démontage de l'élément rotatif de pulvérisation.

Dans une installation de projection de produit de revêtement liquide tel qu'une peinture à solvant organique ou à base d'eau, il est connu de pulvériser le produit de revêtement en fines gouttelettes et de le projeter par voie électrostatique sur l'objet à recouvrir, en utilisant un élément rotatif de pulvérisation en forme de bol, entraîné à grande vitesse. La vitesse peut être comprise entre trente mille et cent mille tours/minute; elle se situe généralement entre quarante mille et soixante mille tours/minute.

A de telles vitesses, il est souhaitable que l'élément rotatif de pulvérisation soit le plus léger possible et que son équilibrage dynamique soit réalisé avec précision, notamment s'il est entraîné par une turbine à paliers à air et/ou magnétiques très sensibles aux effets dits de "balourd" et susceptibles d'être détériorés par eux.

Classiquement, un tel élément rotatif de pulvérisation est assemblé au rotor de la turbine par un ensemble de six à huit boulons régulièrement répartis circonférentiellement. Un tel type d'assemblage alourdit considérablement l'ensemble tournant et peut compliquer l'équilibrage dynamique. En outre, les opérations de montage et démontage de l'élément rotatif de pulvérisation, pour le nettoyage et la maintenance, sont malaisées et nécessitent du temps.

L'invention propose un nouveau type d'assemblage ne présentant pas les inconvénients mentionnés ci-dessus.

L'invention concerne en premier lieu un dispositif de projection de produit de revêtement liquide comprenant un élément rotatif de pulvérisation et des moyens d'entraînement pour entraîner ledit élément de pulvérisation en rotation, caracérisé en ce que ledit élément rotatif de pulvérisation est rattaché auxdits moyens d'entraînement par un élément de couplage élastique comportant au moins une couronne d'emboîtement susceptible d'expansion radiale sous l'action d'une force centrifuge et en prise avec une surface annulaire intérieure d'une partie relativement plus rigide dudit élément rotatif de pulvérisation ou desdits moyens d'entraînement.

Selon un mode de réalisation préféré, la couronne d'emboîtement comporte un bourrelet ou autre saillie annulaire s'étendant radialement vers l'extérieur tandis que la surface annulaire intérieure précitée comporte une gorge de forme et dimension adaptées pour accueillir le bourrelet annulaire. L'élément de couplage élastique peut être un anneau comportant au moins une telle portion élastiquement et uniformément déformable radialement. C'est notamment le cas lorsque ledit élément de couplage élastique est en matière plastique déformable élastiquement.

Selon une autre variante, la couronne d'emboîtement constitue une portion annulaire dans laquelle sont pratiquées des fentes ou autres évidements analogues s'étendant longitudinalement et définissant une pluralité de lamelles souples. Dans ce cas, le bourrelet précité est défini aux extrémités desdites lamelles et a donc une structure segmentée par lesdites fentes. Dans ce cas, ladite couronne d'emboîtement peut être métallique.

L'invention sera mieux comprise et d'autres avantages de celle-ci apparaîtront plus clairement à la lumière de la description qui va suivre de plusieurs modes de réalisation d'un dispositif de projection de produit de revêtement conforme à son principe et d'un outil de montage/démontage, donnée uniquement à titre d'exemple et faite en référence aux dessins annexés dans lesquels:
- la figure 1 est une vue schématique en coupe longitudinale d'une partie d'un dispositif de projection de produit de revêtement liquide conforme à l'invention;
- la figure 2 est une vue analogue à la figure 1 illustrant une variante;
- la figure 3 est une vue analogue à la figure 1 illustrant une autre variante;
- la figure 4 est une vue schématique en coupe longitudinale de la partie terminale d'un dispositif de projection de produit de revêtement illustrant encore une autre variante;
- la figure 5 est une vue en coupe partielle d'un outil de montage/démontage d'un élément rotatif de pulvérisation conforme à l'invention, l'outil étant représenté en prise avec celui-ci; et
- la figure 6 est une coupe VI-VI de la figure 5.

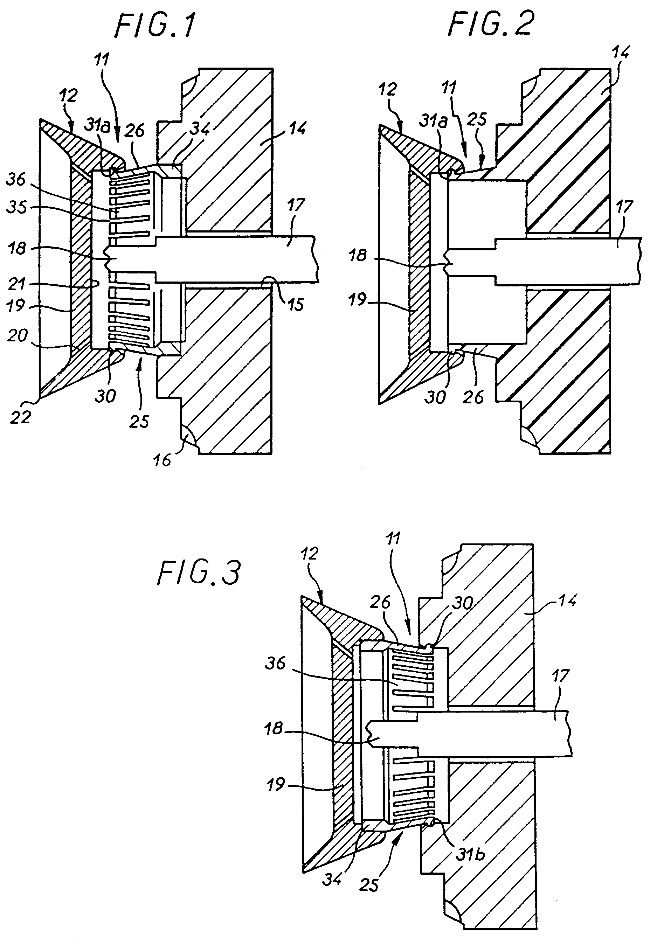

Sur les figures 1 à 3, où les éléments de structure analogues portent les mêmes références numériques, on a représenté partiellement un dispositif de projection de produit de revêtement liquide 11 à élément rotatif de pulvérisation 12, en forme de bol, entraîné à grande vitesse par une turbine représentée ici par son rotor 14. Dans l'exemple, il s'agit d'une turbine à actionnement pneumatique dont le rotor est muni d'ailettes d'entraînement 16 sur lesquelles sont dirigés des jets d'air. Les paliers de suspension radiale et les moyens de stabilisation axiale de ce rotor, pneumatiques et/ou magnétiques et/ou à billes ne sont pas représentés et ne font pas partie de l'invention. Ce rotor 14 comporte un passage axial 15 à l'intérieur duquel s'étend un conduit 17 d'alimentation de produit de revêtement terminé par une buse d'éjection 18 située en regard et à peu de distance d'un voile radial intérieur 19 de l'élément rotatif de pulvérisation 12. De façon classique, ce voile 19 comporte à sa périphérie une couronne de trous 20. Ainsi, sous l'action de la force centrifuge, le produit de revêtement qui se dépose sur la face arrière 21 du voile 19, traverse ce dernier et progresse le long de la paroi intérieure de la partie en forme de bol jusqu'au bord de décharge 22 où il est pulvérisé en fines gouttelettes. Pour une application par voie électrostatique, l'élément rotatif de pulvérisation, s'il est métallique, peut être lui-même porté à la haute tension. S'il est isolant, un système de charge par bombardement peut être utilisé.

Selon une caractéristique importante de l'invention, l'élément rotatif de pulvérisation 12 est rattaché aux moyens d'entraînement, c'est-à-dire ici plus particulièrement le rotor 14, par un élément de couplage élastique 25 comportant au moins une couronne d'emboîtement 26 susceptible d'expansion radiale sous l'action de la force centrifuge et cette couronne d'emboîtement est en prise, par des liaisons de forme adaptées, avec une surface annulaire intérieure d'une partie relativement plus rigide dudit élément rotatif (figures 1 et 2) ou desdits moyens d'entraînement (figure 3). Les liaisons de forme indiquées ci-dessus sont telles que la force de serrage entre la couronne d'emboîtement 26 et la partie plus rigide avec laquelle elle est en prise, augmente avec la force centrifuge, en raison de la déformation de ladite couronne d'emboîtement 26.

En outre, ce type de montage permet un autocentrage en rotation de l'élément rotatif de pulvérisation 12 par rapport au rotor 14. Plus précisément, la couronne d'emboîtement 26 comporte un bourrelet 30 ou toute autre saillie annulaire analogue s'étendant radialement vers l'extérieur tandis que la surface annulaire intérieure avec laquelle elle est en prise comporte une gorge 31a ou 31b de forme et dimension adaptées pour accueillir ce bourrelet annulaire ou analogue. La gorge porte la référence 31a lorsqu'elle est pratiquée dans l'élément rotatif de pulvérisation, ou 31b lorsqu'elle est pratiquée dans le rotor 14.

Comme on le voit sur les dessins, l'élément de couplage élastique 25 a la forme générale d'un anneau où la couronne d'emboîtement précitée est une portion élastiquement et uniformément déformable radialement.

Dans l'exemple de la figure 1, l'élément de couplage élastique 25 est solidaire du rotor 14. Il comporte pour ce faire une bague rigide 34 fixée dans une cavité annulaire du rotor, par exemple encastrée à force ou vissée.

Dans l'exemple de la figure 2, l'élément de couplage élastique 25 fait partie intégrante du rotor 14.

Dans l'exemple de la figure 3, l'élément de couplage élastique 25 est solidaire de l'élément rotatif de pulvérisation 12. La bague 34 est fixée dans une cavité annulaire de ce dernier, par exemple encastrée à force ou vissée.

Dans les exemples des figures 1 et 3, la couronne d'emboîtement 26 est plus particulièrement constituée par une portion annulaire dans laquelle sont pratiquées des fentes 35 ou autres évidements analogues définissant une pluralité de lamelles 36 plus souples. Le bourrelet 30 est défini aux extrémités de ces lamelles et a donc, de ce fait, une structure segmentée par lesdites fentes. Ce type de couronne d'emboîtement convient plus particulièrement lorsque l'élément de couplage élastique est métallique, par exemple en acier inoxydable. Il peut néanmoins être en matière plastique.

Par ailleurs, lorsque l'élément de couplage élastique est en matière plastique, ladite couronne d'emboîtement peut être un anneau non segmenté comme dans le cas de la figure 2, pourvu que celui-ci puisse se déformer uniformément radialement sous l'effet de la force centrifuge.

Dans le mode de réalisation de la figure 2, l'élément de couplage 25 fait partie intégrante de la partie tournante. Dans ce cas, le rotor 14 est aussi en matière plastique, ce qui contribue encore à alléger le dispositif.

Bien entendu, d'autres combinaisons sont possibles. En particulier, l'élément de couplage élastique venu de matière avec le rotor peut également être pourvu de lamelles souples. Il peut inversement faire partie intégrante de l'élément rotatif de pulvérisation.

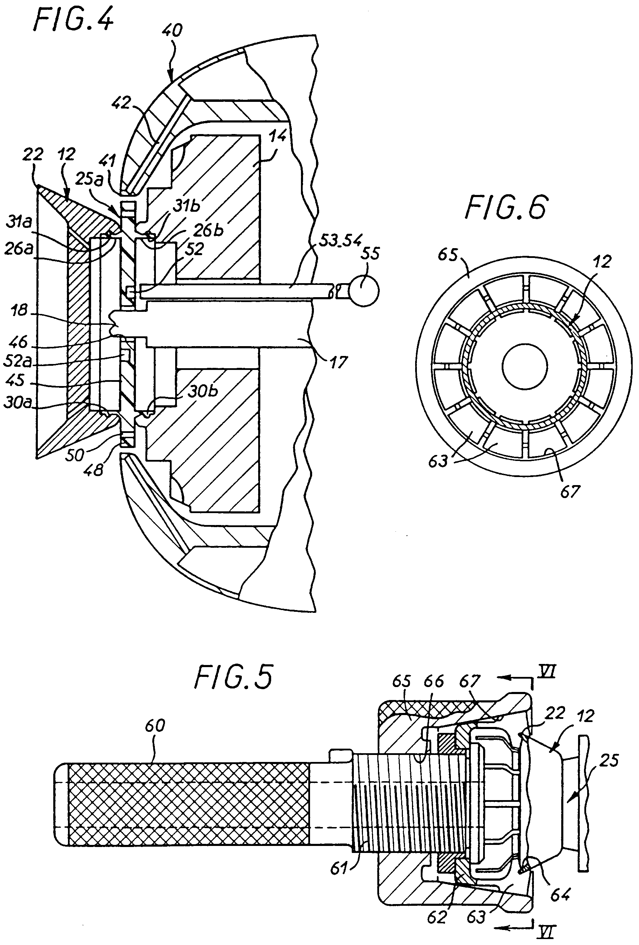

Sur la figure 4 où les éléments de structure analogues à ceux des figures 1 à 3 portent les mêmes références numériques, le dispositif de pulvérisation est représenté de façon plus complète avec la partie avant d'un capot 40 abritant notamment le rotor 14. Ce capot comporte une ouverture circulaire 41 au-delà de laquelle s'étend l'élément rotatif de pulvérisation 12. Des canaux d'éjection d'air 42, régulièrement répartis circulairement, sont ménagés dans le capot et alimentés par une source d'air comprimé non représentée. Ces canaux débouchent par des orifices au voisinage de l'ouverture 41 et, de façon classique, l'air éjecté forme une "jupe d'air" autour de l'élément rotatif de pulvérisation 12. Cet agencement évite la salissure des éléments tournants et participe à la conformation du jet de produit de revêtement pulvérisé.

Dans ce mode de réalisation, l'élément de couplage élastique 25a, ici en matière plastique, comporte deux couronnes d'emboîtement 26a, 26b, coaxiales et alignées, respectivement couplées par emboîtement audit élément rotatif de pulvérisation 12 et auxdits moyens d'entraînement, c'est-à-dire au rotor 14. Ces deux couronnes d'emboîtement sont rattachées à un voile 45 que comporte l'élément dé couplage 25a et elles s'étendent de part et d'autre de ce voile dont l'axe de rotation est bien entendu confondu avec celui du rotor 14. Le voile 45 comporte un trou central 46 traversé par la buse 18. Il comporte aussi une extension 48 s'étendant radialement vers l'extérieur jusqu'au voisinage de l'ouverture 41 du capot 40. Par conséquent, l'élément de couplage élastique 25a est ici conformé pour obturer la plus grande partie de l'ouverture 41 et par conséquent protéger la turbine des salissures provenant de l'extérieur. De plus, le voile 45 comporte, dans l'extension 48, une série de perçages 50. Ces perçages sont disposés régulièrement et de manière hélicoïdale (non visible sur le dessin) de façon à entraîner l'air depuis l'intérieur du capot 40 vers l'extérieur et notamment à créer un courant d'air à l'arrière de l'élément rotatif de pulvérisation en forme de bol pour limiter l'encrassement de la surface externe de ce dernier. Le voile 45 est encore mis à profit pour l'adaptation d'un système de mesure de la vitesse de rotation de l'élément rotatif de pulvérisation 12. Le voile comporte en effet une creusure 52 sur sa face intérieure, du côté du rotor 14 et au voisinage du trou 46. Cette creusure est allongée circonférentiellement et son trajet se trouve en regard des orifices de deux conduits 53, 54 accolés côte-à-côte. Seul l'un des conduits est visible sur la figure 4. L'un des conduits est relié à une source d'air comprimé et l'autre est couplé à un capteur microphonique 55. L'ensemble des deux conduits forme donc une liaison acoustique dont les caractéristiques sont modifiées par le passage, à chaque tour, de la creusure 52. Le capteur microphonique 55 élabore donc un signal dont la fréquence est représentative de la vitesse de rotation de l'élément de pulvérisation. Une autre creusure 52a est pratiquée de l'autre côté du voile 45 et symétriquement par rapport à l'axe de rotation pour maintenir le bon équilibrage dynamique de l'ensemble.

Chacune des deux couronnes d'emboîtement 26a, 26b comporte un bourrelet 30a, 30b. Ces derniers sont respectivement emboîtés dans une gorge 31a de l'élément rotatif de pulvérisation 12 et dans une gorge 31b du rotor 14. Par conséquent, il apparait clairement que lorsqu'une opération de démontage est nécessaire, on peut, soit désolidariser l'élément rotatif de pulvérisation 12 de l'élément de couplage 25a, soit au contraire désolidariser ce même élément de couplage du rotor 14. Dans le premier cas, on se contente de nettoyer ou changer le bol alors que dans l'autre cas on a accès à la turbine.

Bien entendu, les deux couronnes d'emboîtement 26a et 26b pourraient être du même type que celles qui sont décrites aux figures 1 et 3 où l'élasticité est assurée par l'agencement des lamelles.

Dans tous les cas, les liaisons de forme sont prévues pour que, à l'arrêt, l'emboîtement soit possible en mettant en oeuvre des efforts modérés. En revanche, dès que l'ensemble est entraîné en rotation aux vitesses indiquées ci-dessus, la force centrifuge tend à déformer la ou chaque couronne d'emboîtement, dans un sens tel que le serrage entre les parties assemblées soit augmenté. Il en résulte également un autocentrage des éléments solidaires en rotation.

Les figures 5 et 6 illustrent un outil permettant le montage et le démontage de l'élément rotatif 12 à l'extrémité de l'élément de couplage élastique 25. Cet outil comporte un manche 60 muni d'une portion filetée 61 à l'extrémité de laquelle est immobilisée une couronne 62 segmentée de façon à présenter une pluralité de pinces flexibles 63 régulièrement réparties circonférentiellement. Chaque pince comporte une encoche 64 conformée pour venir s'adapter sur le bord 22 de l'organe rotatif de pulvérisation 12. L'ensemble de ces encoches s'étend cependant normalement sur une circonférence plus grande que celle du bord en question. Une bague de serrage 65 s'étend coaxialement à la couronne segmentée 62 et à l'extérieur de celle-ci. Elle comporte un alésage taraudé 66 vissé sur la portion filetée 61 du manche. La surface intérieure 67 de cette bague de serrage a une forme sensiblement tronconique et est susceptible d'entrer en contact avec les pinces flexibles 63. Du fait de son montage vissé sur la portion filetée 61, la bague de serrage 65 est donc mobile axialement par rapport à la couronne 62 et peut provoquer un fléchissement simultané des pinces 63, radialement vers l'intérieur. Lesdites pinces 63 viennent ainsi enserrer le bord de pulvérisation 22, ce qui facilite grandement l'emboîtement ou le déboîtement de l'élément rotatif de pulvérisation.

## Revendications

1. Dispositif de projection de produit de revêtement liquide comprenant un élément rotatif de pulvérisation (12) et des moyens d'entraînement (14) pour entraîner ledit élément de pulvérisation en rotation, caractérisé en ce que ledit élément rotatif de pulvérisation est rattaché auxdits moyens d'entraînement par un élément de couplage élastique (25) comportant au moins une couronne d'emboîtement (26) susceptible d'expansion radiale sous l'action d'une force centrifuge et en prise avec une surface annulaire intérieure d'une partie relativement plus rigide dudit élément rotatif de pulvérisation ou desdits moyens d'entraînement.

2. Dispositif selon la revendication 1, caractérisé en ce que ladite couronne d'emboîtement (26) comporte un bourrelet (30, 30a, 30b) ou autre saillie annulaire s'étendant radialement vers l'extérieur et que ladite surface annulaire intérieure comporte une gorge (31a, 31b) de forme et dimension adaptées pour accueillir ledit bourrelet annulaire ou analogue.

3. Dispositif selon l'une des revendications précédentes, caractérisé en ce que ledit élément de couplage élastique a la forme d'un anneau et en ce que ladite couronne d'emboîtement constitue une portion élastiquement et uniformément déformable radialement.

4. Dispositif selon l'une des revendications précédentes, caractérisé en ce que l'élément de couplage élastique (25) précité est solidaire d'une partie tournante (14) desdits moyens d'entraînement.

5. Dispositif selon la revendication 4, caractérisé en ce que ledit élément de couplage élastique (25) fait partie intégrante de cette partie tournante (figure 2).

6. Dispositif selon l'une des revendications 1 à 3, caractérisé en ce que ledit élément de couplage élastique est solidaire dudit élément rotatif de pulvérisation (figure 3).

7. Dispositif selon l'une des revendications 2 à 6, caractérisé en ce que ladite couronne d'emboîtement est une portion annulaire dans laquelle sont pratiqués des fentes (35) ou autres évidements analogues définissant une pluralité de lamelles souples (36) et en ce que ledit bourrelet (30) est défini aux extrémités desdites lamelles et a une structure segmentée par lesdites fentes.

8. Dispositif selon l'une des revendications 2 à 6, caractérisé en ce que ladite couronne d'emboîtement est en matière plastique déformable élastiquement.

9. Dispositif selon l'une des revendications précédentes, caractérisé en ce que ledit élément de couplage élastique comporte deux couronnes d'emboîtement (26a, 26b) coaxiales, respectivement couplées par emboîtement audit élément rotatif de pulvérisation (12) et auxdits moyens d'entraînement (14).

10. Dispositif selon la revendication 9, caractérisé en ce que ledit élément de couplage comporte un voile (45) s'étendant entre les deux couronnes d'emboîtement.

11. Dispositif selon la revendication 10, caractérisé en ce que ce voile comporte une extension (48) s'étendant radialement vers l'extérieur jusqu'au voisinage d'un capot (40) abritant lesdits moyens d'entraînement.

12. Dispositif selon la revendication 11, caractérisé en ce que ladite extension du voile comporte une série de perçages (50) agencés régulièrement circonférentiellement et orientés pour créer une circulation d'air de l'intérieur dudit capot vers l'extérieur de celui-ci.

13. Dispositif selon l'une des revendications 10 à 12, caractérisé en ce que ce voile comporte une creusure (52) et en ce qu'un capteur microphonique (55) est couplé à cette creusure par une liaison acoustique.

14. Outil de montage/démontage d'un élément rotatif de pulvérisation couplé à des moyens d'entraînement par un élément de couplage élastique à emboîtement, selon l'une des revendications précédentes, caractérisé en ce qu'il comporte une pluralité de pinces flexibles (63) agencées en couronne à l'extrémité d'un manche (60), chaque pince comportant une encoche (64) conformée pour venir s'adapter sur un bord dudit organe rotatif et une bague de serrage (65) s'étendant coaxialement autour de ladite couronne et comportant une surface intérieure (67) sensiblement tronconique en engagement avec lesdites pinces flexibles (63), ladite bague de serrage étant mobile axialement par rapport à ladite couronne, pour provoquer un fléchissement simultané desdites pinces.

## Claims

1. A device for projecting a liquid coating product having a rotary spraying element (12) and drive means (14) for driving said spraying element in rotation, characterised in that the said rotary spraying element is attached to said drive means by an elastic coupling element (25) having at least one fitting ring (26) capable of radial expansion under the action of a centrifugal force and in place with an internal annular surface relatively more rigid than the said rotary spray element or said drive means.

2. Device according to claim 1, characterised in that the fitting ring (26) comprises a barrel (30,30a,30b) or other annular projection extending radially towards the exterior and of which the said internal annular surface comprises a channel (31a,31b) of form and dimension adapted to accept the said annular barrel or the like.

3. Device according to one of the preceding claims, characterised in that the said elastic coupling element is annular in form and in which the fitting ring comprises a portion which is elastically and uniformly deformable radially.

4. Device according to one of the preceding claims, characterised in that the aforesaid elastic coupling element (25) is fast with a rotary part (14) of the drive means.

5. Device according to claim 4, characterised in that said elastic coupling element (25) forms an integral part of the rotary part (Figure 2).

6. Device according to one of claims 1 to 3, characterised in that the said elastic coupling element is fast with the rotatable spray element (Figure 3).

7. Device according to one of claims 2 to 6, characterised in that the fitting ring is an annular portion in which there are provided channels or other like apertures defining a plurality of flexible blades (36) and in which said barrel (30) is defined at the extremities of the said blades and has a structure which is segmented by said channels.

8. Device according to one of claims 2 to 6, characterised in that the fitting ring is of an elastically deformable plastic material.

9. Device according to one of the preceding claims, characterised in that the said elastic coupling element comprises two co-axial fitting rings (26a,26b), respectively coupled by fitting to the rotary spraying element (12) and to the drive means (14).

10. Device according to claim 9, characterised in that the said coupling element comprises a wing (45) extending between the two fitting rings.

11. Device according to claim 10, characterised in that the wing comprises an extension (48) extending radially towards the exterior up to the vicinity of a hood (40) covering said drive means.

12. Device according to claim 11, characterised in that the said extension of the wing comprises a series of orifices (50) arranged regularly circumferentially, and oriented to create a circulation of air of the interior of said hood towards the exterior of the latter.

13. Device according to one of claims 10 to 12, characterised in that the wing comprises a hollow (52) and in that a microphonic sensor (55) is coupled to this hollow via an acoustic link.

14. Tool for assembly/disassembly of a rotary spraying element coupled to drive means by an elastic coupling element for fitting, according to one of the preceding claims, characterised in that it comprises a plurality of flexible grippers (63) arranged in a ring at the end of a sleeve (60), each gripper having a conforming notch (64) to come to fit on an edge of said rotary element and a tightening collar (65) extending coaxially around the said ring and having a substantially frustoconical internal surface engaging with said flexible grippers (63), the said tightening collar being movable axially relative to the ring, in order to cause simultaneous flexing of said grippers.

## Patentansprüche

1. Spritzvorrichtung für ein flüssiges Beschichtungsprodukt mit einem rotierenden Zerstäubungselement (12) und einer Antriebsvorrichtung (14) zum Antreiben des Zerstäubungselementes zur Drehung,
**dadurch gekennzeichnet,**
daß das rotierende Zerstäubungselement mit der Antriebsvorrichtung durch ein elastisches Kupplungselement (25) verbunden ist, das mindestens einen Eingreifkranz (26) umfaßt, der unter der Wirkung einer Zentrifugalkraft einer radialen Ausdehnung fähig ist, und mit einer ringförmigen Innenfläche eines relativ steiferen Teils des rotierenden Zerstäubungselementes oder der Antriebsvorrichtung in Eingriff ist.

2. Vorrichtung nach Anspruch 1, dadurch gekennzeichnet, daß der Eingreifkranz (26) einen Wulst (30,30a,30b) oder einen anderen ringförmigen Vorsprung aufweist, der sich radial nach außen erstreckt, und daß die ringförmige Innenfläche eine Vertiefung (31a,31b) in der Form und in der Dimension, die zur Aufnahme des ringförmigen Wulstes oder dergleichen geeignet sind, aufweist.

3. Vorrichtung nach einem der vorhergehenden Ansprüche, dadurch gekennzeichnet, daß das elastische Kupplungselement die Form eines Ringes aufweist und daß der Eingreifkranz einen elastischen und radial gleichmäßig verformbaren Teil bildet.

4. Vorrichtung nach einem der vorhergehenden Ansprüche, dadurch gekennzeichnet, daß das vorerwähnte elastische Kupplungselement fest mit einem drehenden Teil (14) der Antriebsvorrichtung verbunden ist.

5. Vorrichtung nach Anspruch 4, dadurch gekennzeichnet, daß das elastische Kupplungselement (25) integraler Bestandteil dieses drehenden Teils ist (Figur 2).

6. Vorrichtung nach einem der Ansprüche 1 bis 3, dadurch gekennzeichnet, daß das elastische Kupplungselement fest mit dem rotierenden Zerstäubungselement verbunden ist (Figur 3).

7. Vorrichtung nach einem der Ansprüche 2 bis 6, dadurch gekennzeichnet, daß der Eingreifkranz ein ringförmiges Teil ist, in das Schlitze (35) oder andere analoge Aussparungen, die eine Mehrzahl von nachgiebigen Lamellen (36) bilden, eingearbeitet sind, und daß der Wulst an den Enden der Lamellen ausgebildet ist und eine durch die Schlitze segmentierte Struktur aufweist.

8. Vorrichtung nach einem der Ansprüche 2 bis 6, dadurch gekennzeichnet, daß der Eingreifkranz aus einem elastisch verformbaren Kunststoff besteht.

9. Vorrichtung nach einem der vorhergehenden Ansprüche, dadurch gekennzeichnet, daß das elastisches Kupplungselement zwei koaxiale Eingreifkränze (26a,26b) umfaßt, die jeweils durch Verzahnung mit dem rotierenden Zerstäubungselement und der Antriebsvorrichtung (14) gekoppelt sind.

10. Vorrichtung nach Anspruch 9, dadurch gekennzeichnet, daß das Kupplungselement einen Abdeckflansch (45) umfaßt, der sich zwischen den zwei Eingreifkränzen erstreckt.

11. Vorrichtung nach Anspruch 10, dadurch gekennzeichnet, daß der Abdeckflansch eine Erweiterung (48) umfaßt, die sich radial nach außen bis in die Nähe einer Haube (40) erstreckt, die die Antriebsvorrichtung abdeckt.

12. Vorrichtung nach Anspruch 11, dadurch gekennzeichnet, daß die Erweiterung des Flansches eine Reihe von Bohrungen (50) umfaßt, die regelmäßig über den Umfang angebracht und ausgerichtet sind, um eine Luftzirkulation vom Inneren der Haube nach außen zu erzeugen.

13. Vorrichtung nach einem der Ansprüche 10 bis 12, dadurch gekennzeichnet, daß der Flansch eine Vertiefung (52) aufweist und daß ein Mikrofonaufnehmer an diese Vertiefung über eine akustische Verbindung gekoppelt ist.

14. Werkzeug zum Montieren und Demontieren eines rotierenden Zerstäubungselementes, das mit einer Antriebsvorrichtung über ein elastisches Eingreifkupplungselement gekoppelt ist, nach einem der vorhergehenden Ansprüche,
**dadurch gekennzeichnet,**
daß es eine Mehrzahl von flexiblen Klemmen (63) in Form eines Kranzes am Ende eines Halters (60), wobei jede Klemme eine Kerbe (64) aufweist, die so ausgebildet ist, daß sie sich an den Rand des rotierenden Elementes anpaßt und einen Ziehring (65) umfaßt, der sich koaxial um den Kranz herum erstreckt und eine leicht kegelstumpfartige Innenfläche in Eingriff mit den flexiblen Klemmen (63) aufweist, wobei der Ziehring axial in bezug auf den Kranz bewegbar ist, um ein gleichzeitiges Biegen der Klemmen hervorzurufen.
